# EUROPÄISCHE PATENTANMELDUNG

(11) **EP 4 111 856 A1**
(43) Veröffentlichungstag der Anmeldung: **04.01.2023**
(21) Anmeldenummer: 22401015.7
(22) Anmeldetag: 01.07.2022
(51) Int. Cl.: A01K 1/01

(54) **VORRICHTUNG ZUM ABMISTEN VON HÖFEN UND WIESEN UND SAMMELWALZE SOWIE VERFAHREN**

(30) Priorität: 02.07.2021 DE 102021117199; 02.07.2021 DE 202021103586 U
(71) Anmelder: Mehlhorn, Franziska, 08297 Zwönitz OT Brünlos (DE)
(72) Erfinder: Mehlhorn, Volker, 08297 Zwönitz (DE)
(74) Vertreter: Rumrich, Gabriele

(57) **Zusammenfassung**

Die Erfindung betrifft Vorrichtung zur Aufnahme von Schmutzstoffen von einem Boden, insbesondere von landwirtschaftlichen Nutzflächen zum Abmisten von Höfen und Wiesen, umfassend ein Traggestell (7) einen Auffangbehälter (1) mit einer ersten Behälteröffnung (1.2) zur Zuführung der Schmutzstoffe, einer rotierend gelagerten Sammelwalze (3), welche im Bereich der ersten Behälteröffnung angeordnet ist und die Schmutzstoffe durch die erste Behälteröffnung in den Behälter fördert, wobei die Sammelwalze (3) in Richtung des Bodens reicht und einen Walzenkörper (3.2) mit umfangsseitige Sammellippen (3.1) aufweist, wobei jeweils die sich in der untersten Position befindliche Sammellippe (3.1) in ihrer vertikalen Ausrichtung bis zum Boden reicht oder maximal bis 35mm vom Boden beabstandet ist, eine zugehörige Sammelwalzte und ein verfahren zum Abmisten.

## Beschreibung

Die Erfindung betrifft eine Vorrichtung zum Abmisten von Höfen und Wiesen nach dem Oberbegriff des ersten Anspruchs und findet insbesondere für landwirtschaftliche Betriebe und Freilandhaltung von Pferden Anwendung, ist jedoch auch für andere Tierarten nutzbar. Weiterhin betrifft die Vorrichtung eine Sammelwalze nach dem 10. Schutzanspruch und ein Verfahren zur Aufnahme von Schmutzstoffen nach dem 17. Schutzanspruch.

Die durch die Tiere verursachten Verunreinigungen müssen täglich entfernt werden. Das erfolgt entweder von Hand oder mittels Vorrichtungen zur Reinigung des Bodens, die an die Nutzfahrzeuge beziehungsweise Zugmaschinen, insbesondere Traktoren montiert werden.

In der Druckschrift DE 197 04 777 C2 wird eine Vorrichtung zum Reinigen von Stall-, Hof- und sonstigen Flächen beschrieben. Mittels der Vorrichtung werden Schmutzstoffe, insbesondere Mist, mit einem an der Vorderseite eines Trägerfahrzeugs befestigbaren und von diesem auf die zu reinigende Fläche bewegbaren und von derselben wieder abhebbaren Aufnahmebehälter. Der Aufnahmebehälter ist kastenförmig, vorzugsweise in gleicher Breite wie das Trägerfahrzeug ausgebildet. Der Aufnahmebehälter weist eine vordere untere Schabkante auf, die eine Aufnahmeöffnung für die Schmutzstoffe begrenzt.

Die Vorrichtung weist eine, in einer Arbeitsstellung vor der Aufnahmeöffnung angeordnete, rotierbare und zur Freigabe der Aufnahmeöffnung nach oben über dieselbe zur Oberseite des Behälters hin wegschwenkbare Schaufelwalze auf, die mindestens zwei in Umfangsrichtung der Schaufelwalze gegeneinander versetzte, sich in Längsrichtung der Schaufelwalze erstreckende Schaufeln besitzt. Auf der Oberseite des Aufnahmebehälters ist ein Schwenkgestänge gelagert, mittels dessen die Schaufelwalze anheb- und absenkbar ist. Die Schaufelwalze ist mittels des Schwenkgestänges derart weit über der Oberseite des Behälters zurückschwenkbar, dass die Schabkante bis an Schmutzhaufen, Wände oder dergleichen zur direkten Aufnahme beziehungsweise zum Einschaufeln der Schmutzstoffe heranfahrbar ist.

Gemäß der Vorrichtung ist die Schaufelwalze schwenkbar und schafft die Möglichkeit, den Behälter wie eine Leichtgutschaufel zu verwenden. Die Schmutzstoffe werden gegen eine Wand geschoben und dadurch in den Behälter gebracht
Durch anschließendes Herabschwenken der Schaufelwalze ist ein Nachkehren möglich.

Die Druckschrift EP 3 207 793 A1 betrifft eine mobile Vorrichtung speziell zum Entfernen von Dung in Pferdeboxen. Die Vorrichtung weist einen auf Rädern montierten Behälter mit einer nach vorne öffnenden Schaufel auf. Des Weiteren weist die Vorrichtung eine Häckselanordnung zum Schneiden und Fördern von den zu beseitigenden Materialien auf. An der Vorrichtung ist ein abnehmbarer Materialtank angeordnet, der an einer Rahmenkastenklappe angelenkt und gekippt ist. Im Inneren ist ein Gebläse angeordnet, dass die Förderung in den Behälter unterstützt.

Die Vorrichtungen nach dem Stand der Technik sind nur an einem Frontlader montierbar, da die Hubfunktion des Frontladers zum Leeren des Behälters genutzt wird. Jedoch sind Frontlader deutlich teurer als Traktoren ohne diese Funktion.

Ein weiterer Nachteil besteht darin, dass alle bekannten Systeme Walzen mit Borsten aufweisen, wodurch Verunreinigungen nur ungenügend aufgenommen werden können und die dabei so tief gestellt werden müssen, dass intensiver Bodenkontakt vorhanden ist, wodurch die vorhandene Bodenfläche, insbesondere bei landwirtschaftlichen Nutzflächen für die Tierhaltung, geschädigt würde.

Aufgabe der Erfindung ist es, eine Vorrichtung zum Abmisten von Höfen und Wiesen und eine Sammelwalze und ein Verfahren zu entwickeln, welche einen einfachen konstruktiven Aufbau aufweist und eine bodenschonende Reinigung gewährleistet.

Diese Aufgabe wird mit den kennzeichnenden Merkmalen des 1., 10. und 17. Anspruchs gelöst.

Vorteilhafte Ausgestaltungen ergeben sich aus den Unteransprüchen.

Die Vorrichtung zum Abmisten von landwirtschaftlichen Flächen, Höfen und Wiesen dient der Abmistung in landwirtschaftlichen Betrieben.

Dabei umfasst die Vorrichtung zur Aufnahme von Schmutzstoffen von einem Boden, insbesondere zum Abmisten von Höfen und Wiesen, ein Traggestell einen mit dem

Traggestell gekoppelten Auffangbehälter mit einer ersten Behälteröffnung zur Zuführung der Schmutzstoffe, eine rotierend gelagerten Sammelwalze, welche die Schmutzstoffe durch die erste Behälteröffnung in den Behälter fördert, wobei die Sammelwalze in Richtung des Bodens reicht, und umfangsseitige Sammellippen aufweist, wobei jede Sammellippe mit dem Umfangs der Sammelwalze verbunden ist und sich im Wesentlichen parallel zu einer Längsachse der Sammelwalze erstreckt und wobei jeweils die sich einer untersten Position befindliche Sammellippe in ihrer vertikalen Ausrichtung bis zum Boden reicht oder maximal bis 35mm vom Boden beabstandet ist. Die jeweils nach unten weisende und in Eingriff mit den Schmutzstoffen stehende Sammellippe realisiert durch eine Rotation der Sammelwalze zuerst eine mechanische Aufnahme von Schmutzstoffen mit den Sammellippen. Anschließend werden auf dem Boden verbliebene Schmutzstoffe mittels des durch die Rotation der Sammellippen erzeugten Unterdrucks/Sogs, der in Bewegungsrichtung der Sammellippe wirkt, in den Sammelbehälter gefördert.

Die Sammelwalze besitzt einen Walzenkörper mit umfangsseitige Sammellippen, wobei jede Sammellippe mit dem Walzenkörpers lösbar verbunden ist.

In einer bevorzugten Variante ist die in ihrer untersten Position befindliche Sammellippe in ihrer vertikalen Ausrichtung von dem Boden 2 bis 20mm beabstandet.

Die Sammellippen erstrecken sich dabei insbesondere über die gesamte Breite oder nahezu die gesamte Breite des Walzenkörpers der Sammelwalze und erstrecken sich im Wesentlichen parallel zu einer Längsachse der Sammelwalze.

Dabei ist die Länge der Sammelwalze der Breite des Sammelbehälters angepasst ist.

Vorteilhafter Weise ist die Länge der Sammelwalze etwas kleiner, bevorzugt 3 bis 25 cm kleiner, als die Innenbreite des Behälters im Bereich der ersten Öffnung und somit im Bereich der Sammelwalze, die den Behälter durch die erste Öffnung teilweise durchkämmt, so dass die Sammelwalze im Betrieb nicht mit der Innenseite des Behälters kollidiert.

Die Drehzahl der Sammelwalze liegt bevorzugt zwischen 75 und 1500 Umdrehungen pro Minute, insbesondere zwischen 100 und 1150 Umdrehungen pro Minute und ist stufenweise oder stufenlos einstellbar. Bevorzugt wird im Betrieb eine Drehzahl zwischen 350 und 600 Umdrehungen eingestellt.

In einer bevorzugten Ausführung wird die Drehzahl der Sammelwalze bei einer Erhöhung der Fahrgeschwindigkeit der Vorrichtung erhöht und bei einer Reduzierung der Fahrgeschwindigkeit der Vorrichtung wieder verringert. Dies kann beispielsweise während des Betriebes individuell eingestellt werden.

Über den Außenumfang des Walzenkörpers verteilt sind beispielsweise 4 bis 12 Sammellippen, insbesondere 6 bis 9 Sammellippen, bevorzugt 6 Sammellippen angeordnet sind.

Dabei ist bevorzugt jede Sammellippe lösbar über eine Aufnahmeleiste an dem Walzenkörper befestigt, wobei die Aufnahmeleiste wiederum mit dem mit dem Außendurchmesser des Walzenkörpers verbunden, bevorzugt verschweißt oder genietet ist. Alternativ kann die Aufnahmeleiste auch mit dem Walzenkörper lösbar verbunden sein, beispielsweise über eine Schraubverbindung.

Dabei liegt jede Sammellippe an ihrem in Richtung zum Walzenkörper weisenden Bereich in Richtung zum Walzenkörper mit einer Seite an der Aufnahmeleiste an. An der anderen Seite der Sammellippe liegt in Höhe der Aufnahmeleiste eine Druckleiste an. Die Sammellippe wird dann zwischen Aufnahmeleiste und Druckleiste geklemmt und dadurch zwischen diesen befestigt. Dazu weisen Aufnahmeleiste, Sammellippe und Druckleiste Durchbrüche aufweisen, die miteinander fluchten, wobei Aufnahmeleiste, Sammellippe und Druckleiste mittels einer Schraubverbindung miteinander verbunden werden. Eine defekte bzw. verschlissene Sammellippe kann dadurch einfach ausgetauscht werden.

Die Aufnahmeleiste und/oder die Druckleiste sind bevorzugt streifenförmig ausgebildet und erstrecken sich in Längsrichtung - parallel zur Längsachse - des Walzenkörpers. Sowohl die Aufnahmeleiste als auch die Druckleiste besitzen an ihren von dem Walzenkörper wegweisenden Enden bzw. Seiten einen von der Sammellippe wegweisenden abgewinkelten Bereich. Zwischen dem jeweils an der Sammellippe anliegenden Bereich von Aufnahmeleiste und Druckleiste, der die Sammellippe einklemmt, und dem abgewinkelten Bereich ist dabei ein Radius ausgebildet, über den sich die Sammellippe bei einer Auslenkung biegt. Dadurch wird verhindert, dass die Sammellippe einreißt.

Die Sammellippe weist bevorzugt eine Länge aufweist, die sich entlang der Längsachse des Walzenkörpers Walze erstreckt, sowie eine Höhe und eine Dicke, die dem jeweiligen Einsatz und der Dimensionierung der Vorrichtung angepasst ist, wobei die Sammellippe mit einem Bereich von ca. 10% bis 30% ihrer Höhe zwischen Aufnahmeleiste und Druckleiste eingespannt ist und wobei die Höhe einer Sammellippe 3cm bis 30cm, bevorzugt 12cm bis 17cm beträgt.

Die Dicke einer Sammellippe liegt insbesondere bei 3mm bis 20mm, bevorzugt bei 8mm bis 12mm.

Die Abmessungen der Sammellippen werden dabei insbesondere entsprechend der Ausführung der Vorrichtung gewählt.

Vorteilhafter Weise bestehen die Sammellippen aus einem elastischen Material, so dass diese in dem Bereich außerhalb ihres Befestigungsbereiches elastisch biegbar sind.

Bevorzugt bestehen die Sammellippen aus Silikon und/oder Gummi und/oder gewebeverstärktem Hochleistungskautschuk und/oder Polyurethan und weisen insbesondere eine Shore A-Härte zwischen 55 bis 85, bevorzugt zwischen 60 und 77, insbesondere von 65 bis 70 auf.

Neben der lösbaren Befestigung können die Sammellippen auch auf den Walzengrundkörper aufvulkanisiert oder anderweitig unlösbar befestigt sein.

In diesem Fall muss jedoch immer die gesamte Sammelwalze bei Verscheiß bzw. Beschädigung gewechselt werden.

Der Sammelbehälter weist einen Unterboden auf, der zumindest im Bereich der ersten Behälteröffnung zwischen 20mm und 50mm über dem Boden angeordnet ist.

Durch den geringen Abstand zum Boden wird die Sogwirkung der Sammellippe noch verstärkt und die Schmutzstoffe, welche nicht mechanisch durch Sammellippen eingeschaufelt wurden, werden noch besser in den Behälter eingesaugt.

Der Unterboden des Sammelbehälters ist vorteilhafter Weise in Richtung zur ersten Öffnung um einen Winkel a in der Art einer Schürfleise nach unten geneigt, so dass die Schmutzstoffe besser in den Behälter gefördert werden.

Die Sammelwalze kann in Fahrtrichtung vor oder nach der Behälteröffnung angeordnet sein, je nach konstruktiver Ausgestaltung der Vorrichtung, wobei in einem Schubbetrieb der Vorrichtung die Sammelwalze bevorzugt an dem Traggestell angeordnet ist und der Behälter ohne Sammelwalze zum Entleeren nach oben geschwenkt wird und in einem Zugbetrieb die Sammelwalze bevorzugt an dem nach oben schwenkbarem Behälter angeordnet ist und beim Entleeren des Behälters mit diesem nach oben geschwenkt wird. In beiden vorgenannten Varianten ist die Vorrichtung bevorzugt nicht selbstfahrend und wird zum Betreiben an ein landwirtschaftliches Gerät gekoppelt.

Der Behälter ist mittels eines Scharniers mit dem Traggestell verbunden ist und am Behälter und/oder oder am Traggestell sind Räder angeordnet sind. Der Behälter ist zum Entleeren beispielsweise mittels eines hydraulischen Hubelements nach oben schwenkbar, wobei das Entleeren über die erste Behälteröffnung oder über eine zweite Behälteröffnung erfolgt, die der ersten Behälteröffnung gegenüberliegt.

Das Traggestell weist eine Anschlussaufnahme auf und ist an einem Nutzfahrzeug zum Zug- oder Schubbetrieb montierbar, wenn die Vorrichtung nicht selbstfahrend bzw. autonom fahrend ausgeführt ist.

Ist die Vorrichtung selbstfahrend bzw. autonom fahrend ausgeführt, weist diese mindestens einen Antriebsmotor zum Antrieb eines oder mehrerer Räder aufweist sowie mindestens einen Antrieb für die Sammelwalze und mindestens einen Antrieb zur Realisierung der Schwenkbewegung des Behälters zu dessen Entleerung.

Dabei sind an dem Traggestell die antreibbaren und lenkbaren Räder aufgenommen und auf dem Traggestell stützt sich der Behälter ab, der schwenkbar am Traggestell gelagert ist. Die Sammelwalze ist bevorzugt ebenfalls am Traggestell drehbar gelagert. Die Vorrichtung weist in diesem Fall die Elektronik entsprechende Sensoren und die Steuerung auf.

Ist die Vorrichtung in der Art eines Roboters autark betreibbar ist diese bei Erreichen eines vorgegebenen Ladegewichts der aufgenommenen Schmutzstoffe selbsttätig zu einer Entleerungsstation fahrbar. Weiterhin ist diese selbsttätig zu einer Ladestation fahrbar.

Vorteilhafter Weise ist das Gewicht des Sammelbehälters mittels eines in die Vorrichtung integrierten Messsystems messbar, so dass ein Signal ausgegeben wird, wenn das zulässige Ladegewicht erreicht ist, dies ist auch bei den nicht selbsttätig fahrenden Varianten sinnvoll.

Ist das System autonom betreibbar, fährt es dann selbstständig zum Entladen an die vorgegebene Position.

Die autonom fahrende Vorrichtung kann auf verschiedene Weisen gesteuert werden. Beispielsweise kann diese sattelitengesteuert oder kameragesteuert sein. Auch andere Steuerungsarten, die beispielsweise bei autark betriebenen Systemen verwendet werden, sind möglich.

Die selbstfahrende bzw. autark betriebene Vorrichtung ist beispielsweise mittels eines Hybridantriebes oder eines Elektroantriebes oder eines Wasserstoffantriebs fahrbar.

Die Vorrichtung ist mittels einer eigenen Steuereinrichtung versehen oder auch mittels Kabel oder kabellos bedienbar.

Die Erfindung betrifft weiterhin eine Sammelwalze, die insbesondere für die vorgenannt beschriebene Vorrichtung einsetzbar ist.

Die Sammelwalze weist einen Walzenkörper mit daran befestigten Sammellippen auf, wobei sich die Sammellippen über die gesamte Breite oder nahezu die gesamte Breite des Walzenkörpers der Sammelwalze erstrecken, wobei die Sammellippen aus einem elastischen Material bestehen, so dass diese in dem Bereich außerhalb ihres Befestigungsbereiches elastisch biegbar sind.

Jede Sammellippe ist dabei mit dem Umfang des Walzenkörpers bevorzugt lösbar verbunden, kann aber auch unlösbar verbunden sein. Eine Möglichkeit besteht darin, dass sie Sammellippen auf den Walzengrundkörper aufvulkanisiert sind oder auch mit diesem anderweitig, z.B. auch einteilig, verbunden bzw. ausgebildet sind.

In einer bevorzugten Variante sind die Sammellippen im Wesentlichen parallel zu einer Längsachse des Walzenkörpers ausgerichtet oder winden sich in einem Steigungswinkel um den Außendurchmesser des Walzenkörpers.

Bevorzugt sind die Sammellippen jeweils durchgängig ausgebildet und weisen eine langgestreckte rechteckige oder rechteckförmige Form auf. Es besteht jedoch auch die Möglichkeit, dass anstelle einer durchgängigen Sammellippe mehrere Sammellippenabschnitte nebeneinander angeordnet sind. Dazu kann eine Sammellippe in drei, vier oder fünf oder auch mehr Sammellippenabschnitte unterteilt sein. Dies bietet bei einer lösbaren Verbindung mit dem Walzenkörper den Vorteil, dass nicht eine komplette Sammellippe ausgewechselt werden muss, wenn nur ein Bereich bzw. Abschnitt beschädigt ist.

Die Sammelwalze ist von einem Motor antreibbar, wobei die Drehzahl der Sammelwalze insbesondere zwischen 75 und 1500 Umdrehungen pro Minute, bevorzugt bei 100 bis 1150 Umdrehungen pro Minute liegt.

Über den Außenumfang des Walzenkörpers verteilt sind bevorzugt 4 bis 12 Sammellippen, insbesondere 6 bis 9 Sammellippen, besonders bevorzugt 6 Sammellippen angeordnet.

Im Fall der Realisierung von austauschbaren Sammellippen ist jede Sammellippe z.B. mittels einer Aufnahmeleiste bevorzugt lösbar an dem Walzenkörper befestigt, wobei die Aufnahmeleiste bevorzugt mit dem Außendurchmesser des Walzenkörpers verschweißt ist. Alternativ kann die Aufnahmeleiste auch mit dem Walzenkörper verschraubt oder vernietet sein.

Jede Sammellippe liegt mit ihrem in Richtung zum Walzenkörper weisenden Bereich mit einer Seite an der Aufnahmeleiste an und ist mit der Aufnahmeleiste verschraubt. Vorteilhafter Weise schließt sich an die andere Seite der Sammellippe in Höhe der Aufnahmeleiste eine Druckleiste an.

Aufnahmeleiste, Sammellippe und Druckleiste werden dann miteinander bevorzugt lösbar verbunden.

Dazu weisen diese zueinander fluchtende Durchbrüche auf und werden mittels durch die Durchbrüche führende Schraubverbindungen miteinander verbunden (mittels entsprechender Schrauben und Muttern).

Die Aufnahmeleiste und/oder die Druckleiste sind streifenförmig ausgebildet, erstrecken sich bevorzugt über die Lange des Walzenkörpers und weisen an ihrem von dem Walzenkörper wegweisenden Enden/ einen von der Sammellippe wegweisenden abgewinkelten/abgekanteten Bereich auf.

Dabei ist zwischen dem an der Sammellippe anliegenden Bereich der Aufnahmeleiste und/oder die Druckleiste und dem abgewinkelten Bereich ein Radius ausgebildet, über den sich die Sammellippe bei einer Auslenkung biegt.

Dadurch wird eine Beschädigung, insbesondere ein Einreißen der Sammellippe durch Wechselbelastung vermieden, wenn diese sich im Betrieb hin-und-her-biegt.

Die Sammellippe weist bevorzugt eine Länge aufweist, die sich entlang der Längsachse Walze erstreckt, sowie eine Höhe und eine Dicke, wobei die Sammellippe mit einem Bereich von ca. 10% bis 40% ihrer Höhe zwischen Aufnahmeleiste und Druckleiste eingespannt ist und wobei die Höhe einer Sammellippe 3cm bis 30cm, bevorzugt 12cm bis 17cm beträgt.

Die Dicke einer Sammellippe beträgt beispielsweise 3mm bis 20mm, bevorzugt 8mm bis 12mm.

Die Sammellippen bestehen aus einem biegsamen, elastischen Material, wie beispielsweise Silikon und/oder Gummi und/oder gewebeverstärktem Hochleistungskautschuk oder aus Polyurethan, insbesondere Polyurethan Elastomeren, welche eine hohe Verschleißfestigkeit, eine sehr gute dynamischer Belastung und hohes Rückstellvermögen besitzen.

Weiterhin weisen die Sammellippen bevorzugt eine Shore A-Härte zwischen 55 bis 85, bevorzugt zwischen 60 und 75, insbesondere von 65 bis 70 auf.

Gemäß einer Ausführung der Erfindung sind die Sammellippen mit ihrer zum Walzenkörper weisenden Längskante von dem Außendurchmesser des Walzenkörpers etwas beabstandet oder liegen daran an.

Bevorzugt ist die zum Walzenkörper weisenden Längskante einer Sammellippe von dem Außendurchmesser des Walzenkörpers 1 bis 5 mm beabstandet um eine Reibung zum Walzenkörper zu vermeiden.

Verfahrensgemäß erfolgt die Aufnahme von Schmutzstoffen von einem Boden/einer landwirtschaflichen Nutzfläche, insbesondere zum Abmisten von Höfen und Wiesen, mittels einer rotierenden Sammelwalze, welche Sammellippen aufweist dadurch, dass , wobei die Sammelwalze mit ihren Sammellippen bis zum Boden oder nahe zum Boden reicht und dass jeweils eine nach unten weisende und in Eingriff mit den Schmutzstoffen stehende Sammellippe durch eine Rotation der Sammelwalze zuerst eine mechanische Aufnahme von Schmutzstoffen realisiert und danach auf dem Boden verbliebene Schmutzstoffe mittels des durch die Rotation der Sammellippen erzeugten Unterdrucks/Sogs in einen Sammelbehälter gefördert/gesaugt werden.

Das Verfahren erfolgt dabei unter Nutzung eines Traggestells eines Auffangbehälters mit einer ersten Behälteröffnung zur Zuführung der Schmutzstoffe, der rotierend gelagerten Sammelwalze, welche im Bereich der ersten Behälteröffnung angeordnet ist und die Schmutzstoffe durch die erste Behälteröffnung in den Behälter fördert.

Dadurch wird eine Beschädigung der landwirtschaftlichen Nutzfläche vollständig oder nahezu vollständig vermieden. Weiterhin werden die Sammellippen der Sammelwalze durch den geringen oder fehlenden Bodenkontakt an ihren bodenseitigen Enden nur wenig mechanisch belastet, wodurch die Sammelwalze eine hohe Lebensdauer hat.

Die Vorrichtung umfasst einen Sammelbehälter zur Aufnahme von Schmutzstoffen mit einer Behälteröffnung zur Entleerung der Schmutzstoffe und einer, in einer Arbeitsposition über dem Boden liegende Öffnung durch welche die Schmutzstoffe mit einer rotierenden Sammelwalze, welche durch die Öffnung nach unten
in Richtung zum Boden reicht, in den Auffangbehälter gefördert werden. Die Sammelwalze ist mit Mitteln zum Fördern der Schmutzstoffe in den Auffangbehälter versehen, die in Form von Sammellippen ausgebildet sind. Jede Sammellippe erstreckt sich in Längsrichtung der Sammelwalze und ist mit einem Ende mit der Sammelwalze verbunden und ragt mit dem anderen Ende von der Sammelwalze weg.

Es sind mehrere Sammellippen um die Sammelwalze herum angeordnet, die strahlenförmig von der Sammelwalze wegweisen.

Die über dem Boden liegende Öffnung ist quer zu einer Längsachse der Vorrichtung angeordnet und weist eine Breite auf, die bevorzugt gleich oder kleiner ist, als der Außendurchmesser der Sammelwalze ohne Sammellippen. Die Länge der Öffnung ist etwas größer als die Länge der Sammelwalze.

Der Sammelbehälter ist in Bezug auf das Traggestellt mittels eines Hubelements nach oben schwenkbar an dem Traggestell angeordnet, wobei in einer Entleerungsposition die Schmutzstoffe durch die Behälteröffnung des nach oben geschwenkten Behälters entleerbar sind und wobei in einer Arbeitsposition der Behälter herabgeschwenkt ist derart, dass die Behälteröffnung mittels des Traggestells verschlossen ist. Durch eine derartige Ausgestaltung ist die Vorrichtung auch an Fahrzeugen möglich, die keine Frontladeraufnahme aufweisen. Ein Anheben über das Nutzfahrzeug zum Entleeren kann entfallen.

Die Sammelwalze ist vorzugsweise mittels eines an ihrer Längsachse montierten Motors angetrieben. Es kann jedoch auch ein Antrieb der Walze über ein Getriebe erfolgen.

Die Sammelwalze ist mit umfangsseitigen Sammellippen ausgebildet, wobei die Sammelwalze im Bereich der nach unten weisenden bodenseitigen Öffnung angeordnet ist derart, dass wenigstens eine Sammellippe durch die nach unten weisende Öffnung in Richtung des Bodens oder bis zum Boden reicht.

Die Sammelwalze kann auch in Form einer Vertikutierwalze, einer Kehrwalze oder einer Mulcherwalze ausgebildet sein. Auch weitere Walzenformen sind möglich.

Die Sammellippen erstrecken sich die über die gesamte Breite der Sammelwalze. Bevorzugt erstreckt sich die Sammelwalze über nahezu die gesamte Breite der Vorrichtung. Die nach unten weisende und in Eingriff mit den Schmutzstoffen stehende Sammellippe ist in ihrer vertikalen Ausrichtung von dem Boden 3 bis 20mm beabstandet, können aber auch bis zum Boden reichen, wobei mittels der Sammelwalze durch deren Rotation im Bereich der nach unten weisenden Öffnung ein Unterdruck bzw. Sog erzeugbar ist. Der Behälter ist bevorzugt im Bereich der ersten Öffnung zwischen 20 und 50 mm über dem Boden angeordnet. Bevorzugt beträgt der Abstand der in Eingriff mit den Schmutzstoffen stehende Sammellippe 2 bis 10 mm vom Boden. Der Behälter weist bevorzugt einen Abstand zum Boden von 40mm auf. Der Abstand der Unterseite des Behältes zum Boden ist frei wählbar, je nach der Form des Geländes.

Die Reinigung erfolgt sowohl mechanisch über den Kontakt der Sammellippen mit den Schmutzstoffen als auch über den erzeugten Unterdruck kontaktlos.

Der Unterdruck entsteht durch Einsatz der Sammellippen in Verbindung mit dem geschlossenen Behälter. Die Sammellippen sind bevorzugt aus einem vulkanisierten Elastomer ausgebildet. So kann mittels der Sammellippen Luft aus dem Behälter geschaufelt werden. Gleichzeitig werden die Schmutzstoffe durch eine Sogwirkung "eingesaugt". Es bleibt eine saubere Oberfläche zurück, wobei kein Abtrag bzw. kaum oder nur wenig Abtrag des Bodens beziehungsweise des Erdreichs erfolgt.

Die Vorrichtung findet auf Beton und Pflasterflächen, Paddockplatten, Kunstrasen, Mineralgemischen und Asphaltrecycling Anwendung. Es lassen sich somit fast alle befahrbaren Flächen reinigen.

Gemäß der Vorrichtung ist die Sammelwalze in Fahrtrichtung vor oder nach der Behälteröffnung angeordnet, wobei in einem Schubbetrieb der Vorrichtung die Sammelwalze an dem Traggestell und in einem Zugbetrieb die Sammelwalze an dem nach oben schwenkbarem Behälter angeordnet ist. Der Schubbetrieb beschreibt den Anbau der Vorrichtung an der Front des Nutzfahrzeuges, der Zugbetrieb beschreibt den Heckanbau. Es kann in Abhängigkeit des verwendeten Nutzfahrzeuges eine entsprechende Vorrichtung montiert werden.

Die Sammelwalze ist höhenverstellbar und mittels eines Schnellverschlusses wechselbar. Es können entweder zwei mechanisch voreingestellte Höhen mittels Exzenter oder eine individuelle Höheneinstellung Anwendung finden. Das ermöglicht das schnelle Auswechseln der jeweiligen Walzen je nach Verwendungszweck. Die Höhenverstellung ist vorzugsweise mechanisch mit einem Arretierungsbolzen ausgebildet. So kann auf den Untergrund beziehungsweise auf die Abnutzung der an der Sammelwalze angeordneten Sammellippen reagiert werden.

In einer vorteilhaften Ausgestaltung ist der Behälter mittels eines Scharniers mit dem Traggestell verbunden. Die Schwenkbewegung erfolgt bevorzugt mittels eines Hubelements, wobei das erste Ende jedes Hubelements am Behälter und das zweite Ende jedes Hubelements am Traggestell angeordnet ist.

Das erste und zweite Hubelement ist bevorzugt in Form eines ersten und zweiten Hydraulikzylinders ausgebildet, wobei die Hydraulikzylinder linksseitig und rechtsseitig an dem Behälter beziehungsweise Traggestell angeordnet sind. Es können jedoch auch Gewindestangen oder anderweitige Mittel zur Änderung der Einbaulänge des Hubelements Anwendung finden.

Der Behälter weist bevorzugt einen Aussteifungsrahmen zur Aufnahme der Druckkräfte sowie der Bewegungskräfte während der Nutzung und Entleerung auf.

Vorzugsweise ist das Traggestell mit einer Euroaufnahme zum Anschluss an einer Zugmaschine ausgebildet. So können die Aufnahmen an Front und Heck des Nutzfahrzeuges, insbesondere des Traktors genutzt werden. Des Weiteren kann die Vorrichtung mittels einer handelsüblichen Adapterlösung von der Euroaufnahme auf eine 3-Punkt Aufnahme adaptiert werden.

Der Behälter weist vorzugsweise eine zu der Behälterwand beabstandete Flurwalze mit Gelenklager auf. Die Flurwalze ist in Fahrtrichtung nach der Sammelwalze angeordnet, wobei in einer ersten Ausgestaltung als Frontanbau das Traggestell die Flurwalze mit Gelenklager aufweist und in einer zweiten Ausgestaltung als Heckanbau am Nutzfahrzeug der Behälter die Flurwalze mit Gelenkwelle aufweist. Mittels der Flurwalze kann ein gleichbleibender Abstand zum Boden gewährleistet werden. Des Weiteren wird ein Eingraben der Vorrichtung vermieden.

Das ermöglicht das Ausgleichen von Bodenerhebungen und dient durch eine robuste Ausgestaltung als Anprallschutz.

Vorzugsweise weist die Vorrichtung eine Schwimmstellung auf. So können Bodenunebenheiten besser zwischen der Zugmaschine und der Vorrichtung ausgeglichen werden. Der Vorrichtung kann ein unabhängiges Bewegungsmuster in Abhängigkeit von dem Untergrund gegenüber der Zugmaschine eingeräumt werden. Zudem weist die Vorrichtung einen Querriegel auf, mittels dessen eine Höhenbewegung ausgleichbar ist.

Für die Nutzung auf aller Art von Untergründen weist die Vorrichtung am Behälter montierte und drehbar gelagerte Räder auf. Diese können seitlich oder unter dem Behälter montiert sein. Bei einer seitlichen Montage erstreckt sich der Behälter zwischen den Rädern in Richtung des Bodens. Besonders bevorzugt sind die Räder mittels einer Einzelradaufhängung mit dem Behälter verbunden und unter einer an dem Behälter angebrachten Abdeckung angeordnet. Die Abdeckung kann L-förmig ausgestaltet sein und wird mit dem Behälter an einem Schenkel der Abdeckung verbunden. Der zweite Schenkel dient als Abdeckung der Räder.

Der Behälter ist bevorzugt aus Stahlblech gekantet beziehungsweise verschweiß, wodurch eine robuste Bauform erzeugbar ist.

Bevorzugt ist im Inneren des Behälters wenigstens ein Schottblech angeordnet, sodass eine optimale Befüllung des Behälters mit den gesammelten Schmutzstoffen trotz auftretender Vibrationen möglich ist. Es wird verhindert, dass das Material durch die Vibrationen wieder nach vorn gefördert wird.

Die Vorrichtung wird mittels eines Hydrauliksystems mit dem für die Hubelemente notwendigen Fluid und dem benötigten Betriebsdruck versehen. Das Hydrauliksystem kann an den Traktor beziehungsweise das Nutzfahrzeug angeschlossen werden. Zum Schutz der Vorrichtung sind in dieser einige Sicherheitsmaßnahmen angeordnet, wie zum Beispiel Überdruck- und Rückschlagventile. Diese Ventile schützen die hydraulische Einheit vor Schäden durch Fehlbedienung oder Störungen. Alternativ ist es möglich, das komplette System bzw. auch Teile des Systems elektrisch zu betreiben.

Des Weiteren ist ein Ventil zur Gewährleistung aller hydraulischen Funktionen vorgesehen, auch wenn nur ein doppelwirkender hydraulischer Steuerkreislauf vorhanden ist. So ist die Vorrichtung an allen Arten von Zugmaschinen einsetzbar.

In einer vorteilhaften Ausgestaltung ist die Vorrichtung mittels einer eigenen Steuereinrichtung mittels Kabel oder kabellos bedienbar. Dies kann beispielsweise über eine Funkfernbedienung oder anderweitige drahtlose Kommunikationsmöglichkeiten erfolgen.

Die erfindungsgemäße Vorrichtung ist in einer ersten Ausgestaltung als Frontanbau und in einer zweiten Ausgestaltung als Heckanbau nutzbar. Die Verbindung mit dem Nutzfahrzeug erfolgt entweder mittels der an der Vorrichtung ausgebildeten EuroAufnahme oder mittels handelsüblicher Adapterlösungen für eine Drei-Punkt-Aufnahme.

Die Erfindung wird nachfolgend an einem Ausführungsbeispiel und zugehörigen Zeichnungen näher erläutert, ohne auf diese beschränkt zu sein.

Es zeigen:
- Figur 1: eine Vorrichtung in der Seitenansicht in einer Arbeitsposition,
- Figur 2: eine Vorrichtung in der Seitenansicht in einer Entleerungsposition,
- Figur 3: eine Draufsicht auf die Vorrichtung.
- Figur 4: eine alternative Ausgestaltung der Vorrichtung für den Schubbetrieb,
- Figur 5: die Entleerungsposition der alternativen Ausgestaltung der Vorrichtung
- Figur 6: eine Prinzipdarstellung der Walze und des Behälters mit Angabe der Wurfrichtung der Schmutzstoffe,
- Figur 7: eine Prinzipdarstellung eines Details mit der Walze beim Aufnehmen von Schmutzstoffen.
- Figur 8: eine Prinzipdarstellung beim Aufnehmen von Schmutzstoffen durch Sogwirkung / Unterdruck,
- Figur 9: zwei Prinzipdarstellungen der Befestigung einer Sammellippe am Außendurchmesser der Walze,
- Figur 10: zwei weitere Prinzipdarstellungen der Befestigung einer Sammellippe am Außendurchmesser der Walze.

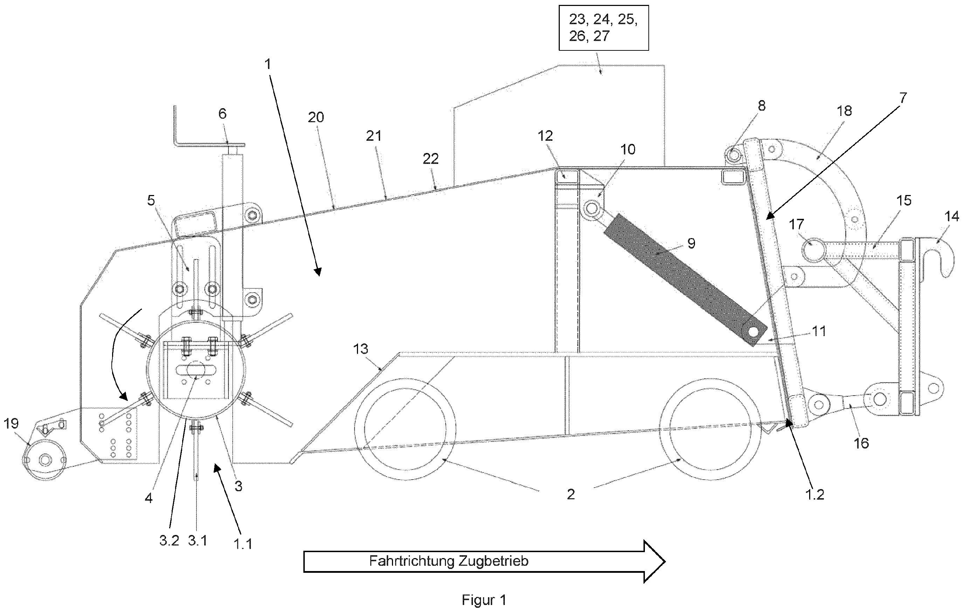

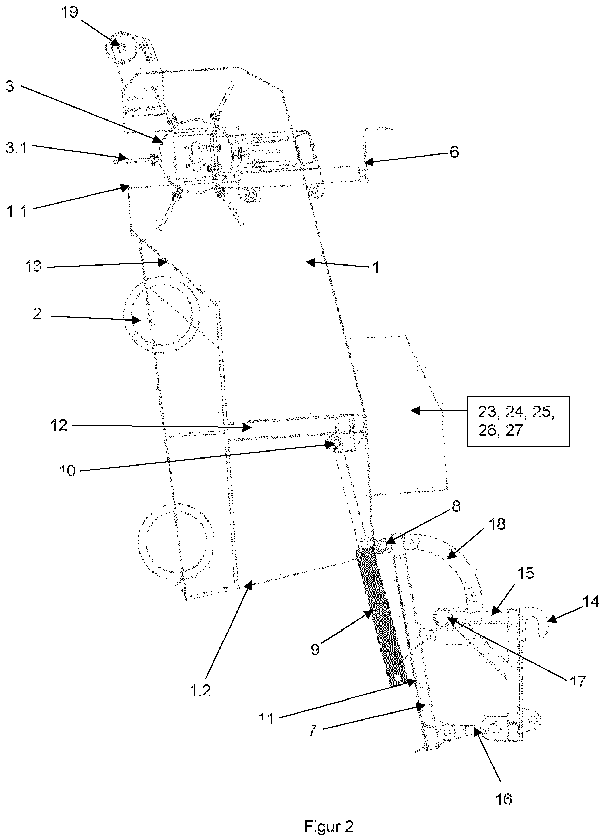

Die Vorrichtung gemäß Figur 1 und 2 betrifft eine Vorrichtung für einen Heckanbau an einem Nutzfahrzeug und ist in einer Seitenansicht in einer Arbeitsposition (Figur 1) und einer Entleerungsposition (Figur 2) dargestellt.

Diese Vorrichtung ist nicht selbstfahren und wird daher hier in einem Zugbetrieb mit einem Nutzfahrzeug verbunden. Die Fahrtrichtung für den Zugbetrieb ist durch den Pfeil dargestellt.

Die Vorrichtung weist einen Behälter 1 mit daran befestigten Rädern 2 auf. Der Behälter 1 ist vorzugsweise aus einem Stahlblech gekantet beziehungsweise verschweißt und bietet so eine robuste Bauform gegenüber Krafteinwirkungen und Einflüssen von außen.

Die Räder 2 können seitlich, wie in den Figuren dargestellt, aber auch unter dem Behälter 1 angeordnet sein. Des Weiteren sind die Räder 2 um 360° drehbar gelagert und mittels Einzelradaufhängung mit dem Behälter 1 verbunden. Das ermöglicht den Einsatz auf allen Arten von Untergründen sowie einen reduzierten Kurvenradius.

In dem vorderen Bereich des Behälters 1 ist eine Sammelwalze 3 über einer nach unten in Richtung des Bodens weisenden Öffnung 1.1 in dem Behälter 1 angeordnet. An der Sammelwalze 3 sind umfangsseitig Sammellippen 3.1 an einem Walzenkörper 3.2 angeordnet, wobei wenigstens eine Sammellippe 3.1 durch die Öffnung 1.1 in Richtung des Bodens weist. Der Walzenkörper 3.2 ist in Form eines Hohlzylinders ausgebildet. Die nach unten weisende und in Eingriff mit den Schmutzstoffen stehende Sammellippe 3.1 ist in ihrer vertikalen Ausrichtung vorzugsweise von dem Boden 5mm oder höher beabstandet, kann jedoch auch Bodenkontakt haben, wobei mittels der Sammelwalze 3 durch deren Rotation im Bereich der nach unten weisenden Öffnung 1.1 ein Unterdruck erzeugbar ist. Der Behälter 1 ist bevorzugt 40 mm über dem Boden angeordnet. Die Sammellippen 3.1 erstrecken sich bevorzugt über die gesamte Breite der Sammelwalze 3 und sind elastisch und bevorzugt aus einem vulkanisierten Elastomer, Silikon oder Polyurethan ausgebildet.

Die Sammelwalze 3 ist bevorzugt mittels einer Schnellwechseleinheit 4 wechselbar derart, dass je nach Verwendungszweck eine geeignete Walze schnell einsetzbar ist. Anstelle einer Sammelwalze kann auch eine Vertikutierwalze oder Kehrwalze oder Mulcherwalze verwendet werden.

Die Sammelwalze 3 ist an beiden Enden mittels einer Aufnahmekonsole 5 mit dem Behälter 1 verbunden, wobei die Aufnahmekonsole 5 eine mechanische Höhenverstellung 6 mit Arretierungsbolzen aufweist. Des Weiteren umfasst die Aufnahmekonsole 5 einen Antrieb für die Sammelwalze 3. Die Höhenverstellung 6 kann links- und rechtsseitig an der Vorrichtung montiert sein. Auch eine elektrische oder hydraulische Steuerung der Höhenverstellung ist denkbar.

Der Behälter 1 ist an einem hier seitlichen Traggestell 7 angeordnet derart, dass das Traggestell 7 eine Anlagefläche für den Behälter 1 an einer hinteren, in Richtung der Zugmaschine weisenden Behälteröffnung 1.2 des Behälters 1 bildet. Die Behälteröffnung 1.2 wird mittels des Traggestells 7 in der Arbeitsposition gemäß Figur 1 verschlossen. Der Behälter 1 ist mittels eines Scharniers 8 schwenkbar mit dem Traggestell 7 verbunden und ist mittels eines Hubelements 9 nach oben ausgelenkbar. Gemäß Figur 2 schwenkt der Behälter 1 sowie die daran montierte Sammelwalze 3 an dem Scharnier 8 nach oben, wodurch die Behälteröffnung 1.2 des Behälters 1 freigegeben wird. Dies führt zum Entleeren des Behälters 1 von den gesammelten Schmutzstoffen. Das Hubelement 9 ist vorzugsweise in Form eines Hydraulikzylinders ausgebildet und rechtsseitig und linksseitig des Behälters 1 mit seinem ersten Ende an einer Konsole 10 an dem Behälter 1 sowie mit seinem zweiten Ende an einer Anschlusskonsole 11 an dem Traggestell 7 montiert. Es kann jedoch auch lediglich ein Hubelement vorgesehen sein, das vorzugsweise mittig auf dem Behälter 1 in Richtung des Traggestells 7 angeordnet ist.

Vorzugsweise weist der Behälter einen Aussteifungsrahmen 12 zur Aufnahme der Druckkräfte sowie Bewegungskräfte durch Bewegung der Vorrichtung auf. Bevorzugt ist die Konsole 10 an dem Aussteifungsrahmen 12 oder im Bereich des Aussteifungsrahmens 12 befestigt.

Im Inneren des Behälters 1 ist wenigstens ein Schottblech 13 vorgesehen. Mittels des Einsatzes dieses Schottbleches 13 ist die Nutzung des maximalen Volumens des Behälters 1 möglich, da andernfalls das gesammelte Material während des Einsatzes durch Vibrationen und Erschütterungen wieder nach vorn gerüttelt wird und sich im Bereich der Sammelwalze 3 zusetzt.

Die Vorrichtung wird mittels einer Anschlussaufnahme 14 mit dem Nutzfahrzeug, beziehungsweise der Zugmaschine verbunden. Die Anschlussaufnahme 14 ist bevorzugt in Form einer Euroaufnahme ausgebildet sodass die Vorrichtung an üblichen Zugmaschinen befestigbar ist. Die Anschlussaufnahme 14 ist mit dem Traggestell 7 linksseitig und rechtsseitig über eine obere Zug-/ Drucktraverse 15 und eine untere Druck-/ Zugstreben 16 verbunden, wobei die untere Druck-/ Zugstrebe 16 beidseitig schwenkbar gelagert ist. So kann die Lastübertragung zwischen Zugmaschine und Vorrichtung erfolgen.

Die Vorrichtung ist bevorzugt schwimmend in Bezug auf das Nutzfahrzeug beziehungsweise die Zugmaschine gelagert. Dazu sind die oberen Zug-/Drucktraversen 15 miteinander mittels eines Querriegels 17 verbunden, der in einem Rundprofil 18 geführt wird, sodass Höhenbewegungen ausgeglichen werden können, jedoch Zug- und Druckkräfte durch die Zugmaschine übertragbar sind. Durch die schwimmende Lagerung wird der Vorrichtung ein unabhängiges Bewegungsmuster in Abhängigkeit von Untergrund gegenüber der Zugmaschine eingeräumt.

Im Bereich der Sammelwalze 3 außerhalb des Behälters 1 ist eine Flurwalze 19 mit einem Gelenklager angeordnet. Mittels der Flurwalze 19 lassen sich Bodenerhebungen ausgleichen. Des Weiteren dient die Flurwalze 19 als Anprallschutz für die Vorrichtung.

Die Bedienung der Vorrichtung erfolgt bevorzugt über ein Hydrauliksystem, wobei in dem Hydrauliksystem zum Schutz ein Überdruck-/und Rückschlagventil 20 vorgesehen sind. Das schützt die hydraulische Einheit vor Schäden durch Fehlbedienung oder Störungen. Des Weiteren umfasst das Hydrauliksystem ein Ventil 21 zur Gewährleistung aller hydraulischen Funktionen auch wenn nur ein doppelwirkender hydraulischer Steuerkreislauf vorhanden ist. Damit ist es an allen Arten von Zugmaschinen einsetzbar. Alternativ kann die Vorrichtung auch rein elektrisch betrieben werden.

Die Verbindung der einzelnen Bauteile erfolgt über eine hydraulische Verrohrung 22. Bevorzugt sind die Bauteile 20, 21 und 22 in einem Aufnahmekasten 23 angeordnet.

Des Weiteren können in dem Aufnahmekasten ein Umschaltventil 24, ein 12V Anschluss 25, eine Stromversorgung 26 und ein Druckflussschutzregelventil 27 angeordnet sein. Das Umschaltventil 24 ist in Form eine 6/2 Wege-Umschaltventils ausgebildet, wobei mittels des Ventils 24 und den 12V-Anschluss sowie die Stromversorgung 26 das Ansteuern der hydraulischen Funktionen erfolgt. Der 12V Anschluss dient der Ansteuerung der Bordelektronik des Laders. Die Stromversorgung 26 ist in Form einer Akku-Einheit ausgebildet und findet Anwendung, wenn kein Anschluss an das 12V Netz möglich ist. Das Druckflussschutzregelventil ist stufenlos einstellbar um die Walzengeschwindigkeit beziehungsweise den hydraulischen Druck im System in Abhängigkeit des verwendeten Nutzfahrzeuges einzustellen und zu regulieren.

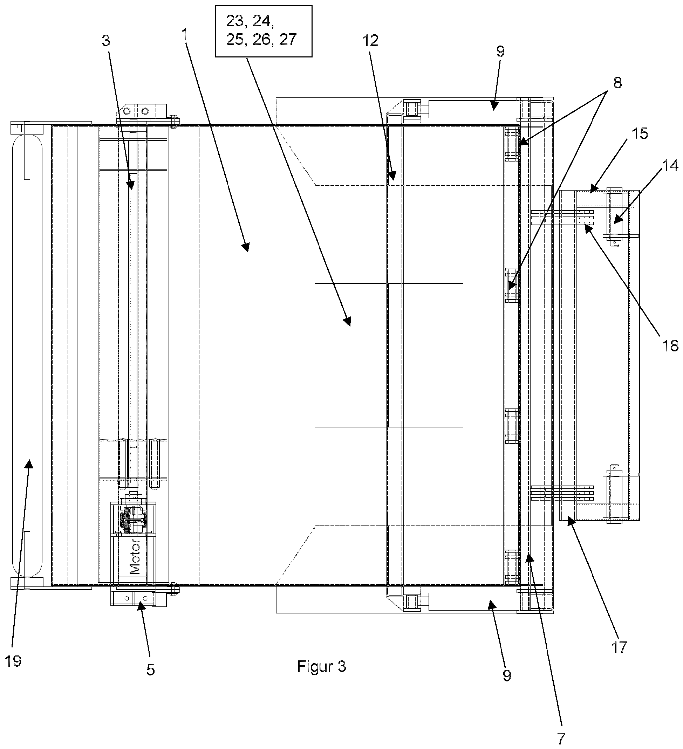

Figur 3 zeigt die Vorrichtung in einer Draufsicht gemäß der Ausgestaltung der Vorrichtung in den Figuren 1 und 2. Das Hubelement 9 ist vorzugsweise in eines Hydraulikzylinders ausgebildet und rechtsseitig und linksseitig des Behälters 1 mit an dem Behälter 1 sowie an dem Traggestell 7 montiert. Mittels der Hubelemente 9 lässt sich eine Schwenkbewegung des Behälters 1 um mehrere Scharniere 8 am Traggestell 7 umsetzen.

Der Behälter 1 wird umfangsseitig von dem Aussteifungsrahmen 12 verstärkt. Des Weiteren ist die Sammelwalze 3 dargestellt, die mittels eines koaxialen Motors, der an der Konsole 5 angeordnet ist angetrieben wird. Die Sammelwalze 3 erstreckt sich mit den daran angeordneten Sammellippen 3.1 über nahezu die gesamte Breite der Vorrichtung. Auf dem Behälter 1 ist der Aufnahmekasten 23 in Form einer Erhebung montiert, wobei der Aufnahmekasten 23 das Überdruck-/ und Rückschlagventil, das Ventil zum Anschluss an eine Zugmaschine und die hydraulische Verrohrung beinhaltet. In der Draufsicht links ist die Flurwalze 19 am Behälter 1 montiert, wobei die Flurwalze 19 hervorsteht und so als Anprallschutz dient.

Die Versorgung erfolgt bevorzugt über elektrische und hydraulische Anschlüsse bzw. Verbindungen zum Nutzfahrzeug.

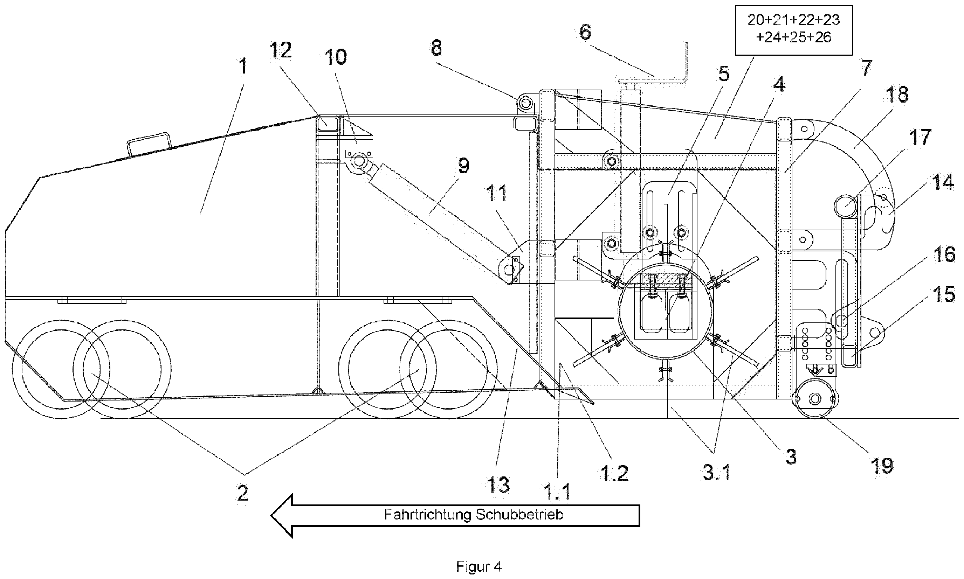

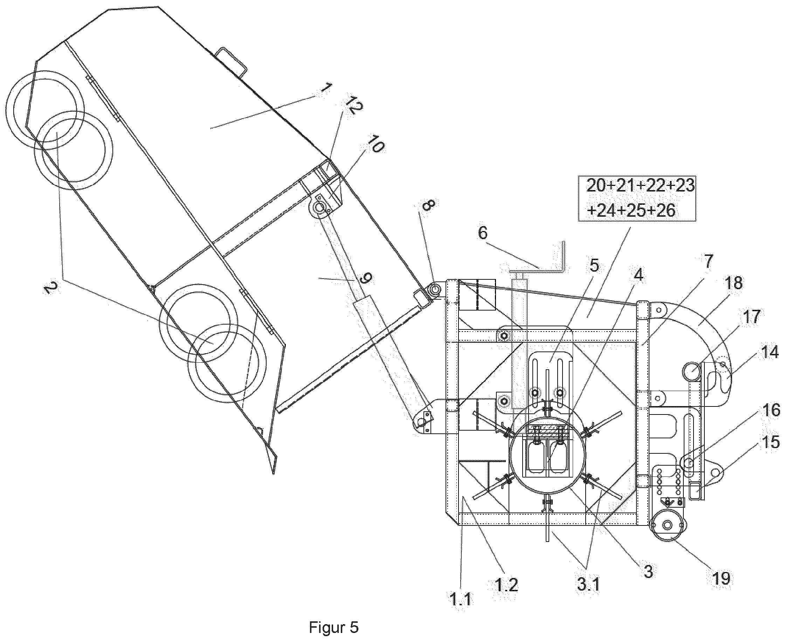

Eine alternative Ausgestaltung der Vorrichtung für ein frontseitige Montage an einem Nutzfahrzeug ist in den Figuren 4 und 5 dargestellt.

Damit kann ein Schubbetrieb der Vorrichtung mittels des Nutzfahrzeuges realisiert werden. Die Fahrtrichtung im Schubbetrieb ist durch den Pfeil in Figur 4 angedeutet. Gemäß den Figuren 4 und 5 unterscheidet sich die Ausgestaltung in Bezug auf die Figuren 1 bis 3 darin, dass die nach unten weisende Öffnung 1.1 mit der darin angeordneten Sammelwalze 3 an dem Traggestell 7 ausgebildet ist.

Die Sammelwalze 3 ist im Bereich der nach unten in Richtung des Bodens weisenden Öffnung 1.1 in dem Traggestell 7 angeordnet. An der Sammelwalze 3 sind umfangsseitig Sammellippen 3.1 angeordnet, wobei wenigstens eine Sammellippe 3.1 durch die Öffnung 1.1 in Richtung des Bodens weist. Die nach unten weisende und in Eingriff mit den Schmutzstoffen stehende Sammellippe 3.1 ist in ihrer vertikalen Ausrichtung von dem Boden bevorzugt 5mm oder auch mehr beabstandet, kann aber auch im Bodenkontakt stehen. Auch in dieser Ausgestaltung ist mittels der Sammelwalze 3 durch deren Rotation im Bereich der nach unten weisenden Öffnung 1.1 ein Unterdruck erzeugbar. Der Behälter 1 ist 40 mm über dem Boden angeordnet. Die Sammellippen 3.1 erstrecken sich bevorzugt über die gesamte Breite der Sammelwalze 3 und sind bevorzugt aus einem vulkanisierten Elastomer ausgebildet. Die Sammelwalze 3 erstreckt sich bevorzugt über nahezu die gesamte Breite der Vorrichtung.

Die Sammelwalze 3 ist bevorzugt mittels einer Schnellwechseleinheit 4 wechselbar und an beiden Enden mittels einer Aufnahmekonsole 5 mit dem Traggestell 7 verbunden, wobei die Aufnahmekonsole 5 eine mechanische Höhenverstellung 6 mit Arretierungsbolzen aufweist. Des Weiteren umfasst die Aufnahmekonsole 5 einen Antrieb für die Sammelwalze 3. Die Höhenverstellung 6 kann links- und rechtsseitig an der Vorrichtung montiert sein. Auch eine elektrische oder hydraulische Steuerung der Höhenverstellung ist denkbar. Des Weiteren kann eine Memory-Funktion für zwei voreingestellte Höhen mittels Exzenter vorhanden sein. Alternativ ist eine individuelle Höhenanpassung möglich.

Der Behälter 1 ist an dem Traggestell 7 angeordnet derart, dass das Traggestell 7 eine Anlagefläche für den Behälter 1 an einer hinteren, in Richtung der Zugmaschine weisenden Behälteröffnung 1.2 des Behälters 1 bildet. Die Behälteröffnung 1.2 wird mittels des Traggestells 7 in der Arbeitsposition gemäß Figur 4 verschlossen. Die geöffnete Position ist in Figur 5 dargestellt.

Der Behälter 1 ist mittels eines Scharniers 8 schwenkbar mit dem Traggestell 7 verbunden und ist mittels eines Hubelements 9 nach oben ausgelenkbar. Gemäß Figur 5 schwenkt der Behälter 1 sowie die daran angeordneten Räder 2 an dem Scharnier 8 nach oben, wodurch die Behälteröffnung 1.2 des Behälters 1 freigegeben wird. Dies führt zum Entleeren des Behälters 1 von den gesammelten Schmutzstoffen. Das Hubelement 9 ist vorzugsweise in Form eines Hydraulikzylinders ausgebildet und rechtsseitig und linksseitig des Behälters 1 mit seinem ersten Ende an einer Konsole 10 an dem Behälter 1 sowie mit seinem zweiten Ende an einer Anschlusskonsole 11 an dem Traggestell 7 montiert. Es kann jedoch auch lediglich ein Hubelement vorgesehen sein, das vorzugsweise mittig auf dem Behälter 1 in Richtung des Traggestells 7 angeordnet ist.

Die Ausgestaltung des Aussteifungsrahmens sowie der Ausgestaltung des Behälters 1 ist analog zu der Vorrichtung gemäß den Figuren 1 bis 3.

Die Vorrichtung wird mittels einer Anschlussaufnahme 14 mit dem Nutzfahrzeug, beziehungsweise der Zugmaschine verbunden. Die Anschlussaufnahme 14 ist bevorzugt in Form einer Euroaufnahme ausgebildet sodass die Vorrichtung an üblichen Zugmaschinen befestigbar ist. Die Anschlussaufnahme 14 ist mit dem Traggestell 7 linksseitig und rechtsseitig über eine obere Zug-/ Drucktraverse 15 und eine untere Druck-/ Zugstreben 16 verbunden, wobei die untere Druck-/ Zugstrebe 16 beidseitig schwenkbar gelagert ist. So kann die Lastübertragung zwischen Zugmaschine und Vorrichtung erfolgen. Die Anschlussaufnahme 14 kann mittels geeigneter Adapter an jedes Nutzfahrzeug montiert werden.

Die Vorrichtung ist bevorzugt schwimmend in Bezug auf das Nutzfahrzeug beziehungsweise die Zugmaschine gelagert. Dazu sind die oberen Zug-/Drucktraversen 15 miteinander mittels eines Querriegels 17 verbunden, der in einem Rundprofil 18 geführt wird, sodass Höhenbewegungen ausgeglichen werden können, jedoch Zug- und Druckkräfte durch die Zugmaschine übertragbar sind. Durch die schwimmende Lagerung wird der Vorrichtung ein unabhängiges Bewegungsmuster in Abhängigkeit von Untergrund gegenüber der Zugmaschine eingeräumt.

Im Bereich der Sammelwalze 3 am Traggestell 7 ist in Fahrtrichtung der Sammelwalze 3 nachfolgend die Flurwalze 19 mit einem Gelenklager angeordnet. Mittels der Flurwalze 19 lassen sich Bodenerhebungen ausgleichen. Es kann ein konstanter Abstand zum Boden gehalten werden.

Die Bedienung und Steuerung der Vorrichtung als Frontanbau gemäß den Figuren 4 und 5 entspricht technisch der Ausgestaltung gemäß der Figuren 1 bis 3 als Heckanbau.

Die Versorgung erfolgt bevorzugt über elektrische und hydraulische Anschlüsse bzw. Verbindungen zum Nutzfahrzeug.

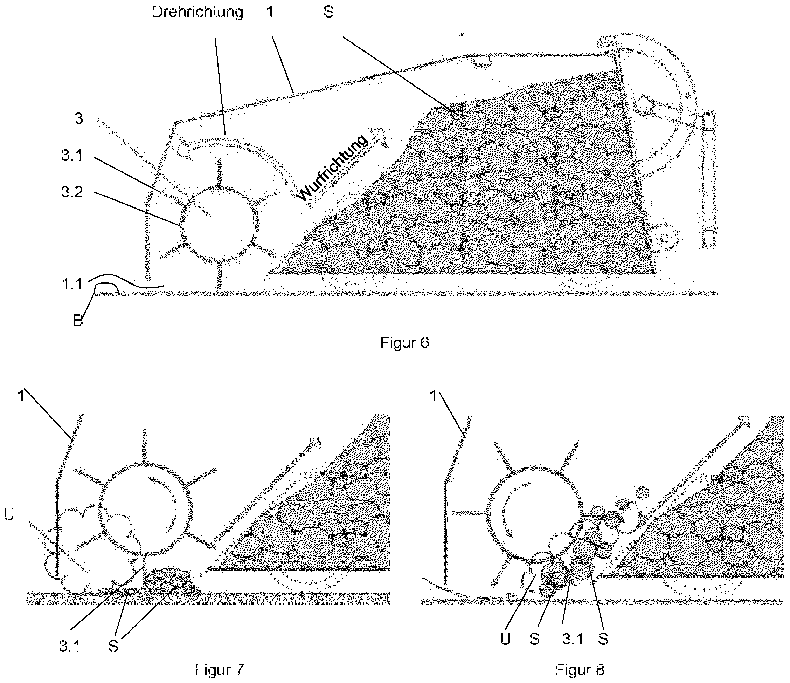

Figur 6 zeigt eine Prinzipdarstellung der Vorrichtung, bei welcher mittels der rotierenden Sammelwalze 3, welche einen Walzenkörper 3.2 mit Sammellippen 3.1 aufweist, Schmutzstoffe S in den Behälter 1 durch dessen Behälteröffnung 1.1 gefördert wurden.

Die Sammelwalze 3 mit ihren hier beispielsweise 6 Sammellippen aus gewebeverstärktem Hochleistungskautschuk oder elastischem Polyurethan wird hydraulisch oder elektrisch angetrieben.

Figur 7 zeigt, wie die nach unten weisende Sammellippe 3.1 die Schmutzstoffe vom Boden B mechanisch wegschiebt. Die sich dadurch in Drehrichtung vor der Sammellippe 3.1 befindlichen Schmutzstoffe S werden in Richtung zum in den Behälter 1 gefördert. Gemäß Figur 7 wurde somit durch die nach unten weisende Sammellippe 3.1 bereits beim ersten Schlag Schmutzstoffe S abgetragen und in Richtung zum Behälter 1 gefördert. Dabei kann ein Rest von Schmutzstoffen S wie angedeutet liegen bleiben. Gleichzeitig wird jedoch durch die schnelle Drehbewegung der unteren Sammellippe 3.1 eine Unterdruckzone U hinter der unteren Sammellippe 3.1 aufgebaut.

Bei einem weiteren durch Rotation der Sammelwalze 3 vollführten Lippenschlag werden gemäß Figur 8 mit der in Drehrichtung vorderen Seite der unteren Sammellippe 3.1 die Schmutzstoffe S in den Behälter 1 gefördert und durch den hinter der Sammellippe 3.2 gebildeten Unterdruck diese Unterdruckzone U in Richtung Sammelbehälter 1 verlagert, wodurch die Unterdruckzone U die liegen gebliebenen Schmutzstoffe S (Restmenge Mist) mitzieht (durch eine Sogwirkung) und ebenfalls in den Behälter 1 fördert.

Dadurch können auch ohne Bodenberührung der Sammelwalze 3 die vorhandenen Schmutzstoffe S zuverlässig beseitigt werden.

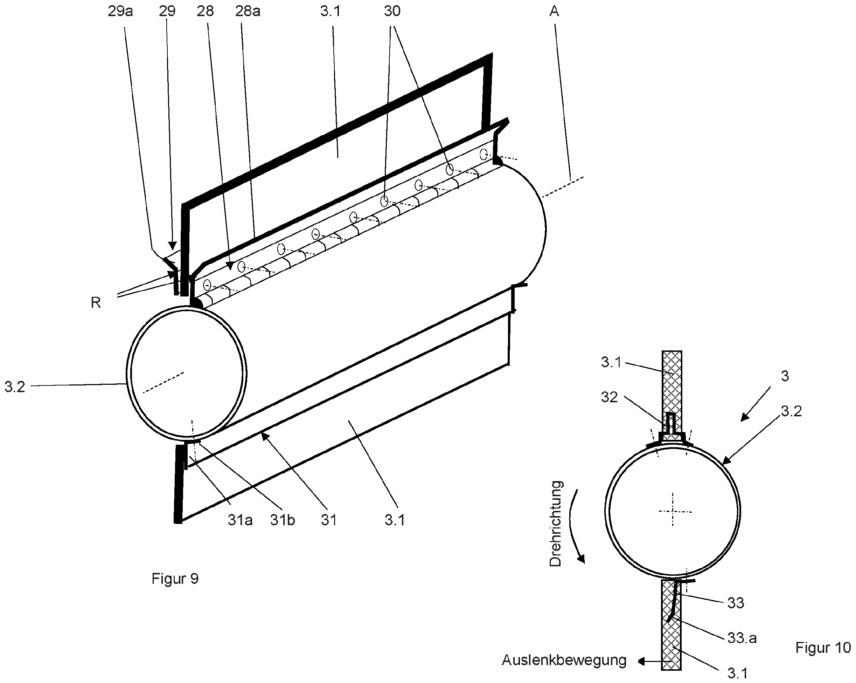

In den Figuren 9 und 10 werden einige Varianten der lösbaren Befestigung der Sammellippen 3.1 am Walzengrundkörper 3.2 beispielhaft dargestellt.

Gemäß Figur 9 wurde bei der oberen Variante eine Aufnahmeleiste 28 am Außendurchmesser des Walzengrundkörpers 3.2 parallel zu dessen Längsachse A angeschweißt. An dieser Aufnahmeleiste 28 liegt die Sammellippe 3.1 mit einer Seite an. An der anderen Seite der Sammellippe 3.1 liegt eine Druckleiste 29 an. Die Aufnahmeleiste 28, die Sammellippe 3.1 und die Druckleiste 29 weisen zueinander fluchtende Durchbrüche 30 auf, die hier nur in der Aufnahmeleiste 28 ersichtlich sind. Durch die Durchbrüche 30 werden nicht dargestellte Schrauben gesteckt und mittels nicht dargestellter Muttern verschraubt. Dadurch wird zwischen Aufnahmeleiste 28, Sammellippe 3.1 und Druckleiste 29 eine Schraubverbindung und somit eine lösbare Verbindung hergestellt. Die Aufnahmeleiste 28 und die Druckleiste 29 sind an ihren von dem Walzengrundkörper 3.2 wegweisenden Enden nach außen und somit von der Sammellippe 3.1 weg mit einem angewinkelten Bereich 28a, 29a versehen. Zwischen den Bereichen 28a, 29a und dem jeweils an der Sammellippe 3.1 anliegenden Bereich ist ein Radius R vorhanden, über den sich die Sammellippe 3.1 bei Auslenkung biegt.

Bei Verschleiß oder anderweitiger Beschädigung der Sammellippe 3.1 kann diese einfach durch Lösen der Schraubverbindung und Entfernung der Druckleiste 29 ausgetauscht werden.

Die andere hier an dem Walzengrundkörper 3.2 beispielhafte Befestigung der Sammellippe 3.1 die hier nach unten weist, erfolgt mittels eines Winkelstücks 31, welches mit einer ersten Seite 31a an der Sammellippe 31 befestigt ist, in diesem Fall durch eine stoffschlüssige Verbindung, wie beispielsweise eine Klebverbindung. Der abgewinkelte Bereich 31b liegt an dem Außendurchmesser des Walzengrundkörpers an und ist mit diesem verschraubt, was hier nur angedeutet ist. Über die Länge des Winkelstücks 31 und des Walzengrundkörpers 3.2 sind eine Vielzahl von Verschraubungen vorzusehen.

Auch in Figur 10 sind zwei Varianten der Befestigung der Sammellippen 3.1 am Walzengrundkörper 3.2 beispielhaft im Querschnitt dargestellt. In die obere Sammellippe 3.1 ist ein mehrfach gebogenes Blechformteil 32 integriert, z.B. durch Einvulkanisieren oder Umspritzen (Spritzgießen), ein RTM-Verfahren oder dergleichen. Das Blechformteil 32 ragt in Richtung zum Walzengrundkörper 3.2 auf beiden Seiten der Sammellippe 3.1 heraus und wird mit den nicht bezeichneten herausragenden Bereichen an dem Walzengrundkörper 3.2 verschraubt, was lediglich angedeutet ist.

Die in Figur 10 untere Sammellippe 3.1 wurde ebenfalls mit einer Verschraubung am Walzengrundkörper 3.2 befestigt. Dazu wurde ein lediglich nach einer Seite abgekantetes Blech 33 in die Sammellippe 3.1 integriert, welches in Richtung zum Walzengrundkörper 3.2 nur auf einer Seite hinausragt und mit dem Walzengrundkörper 3.2 bevorzugt verschraubt ist. Entgegen der Drehrichtung der Sammelwalze 3 ist das Blech 33 an seinem von dem Walzengrundkörper 3.2 wegweisenden Ende in einem Bereich 33.a abgekantet, was eine Beschädigung der Sammellippe 3.1 bei einer Auslenkbewegung entgegen der Drehrichtung während der Aufnahme der hier nicht dargestellten Schmutzstoffe vermeidet oder reduziert.

Bei den Beispielen die eine lösbare Befestigung der Sammellippe 3.1 durch Anschrauben an dem Walzengrundkörper 3.2 beschreiben, sollte der Walzengrundkörper 3.2, der in Form eines Hohlzylinders ausgebildet ist, eine genügende Wandstärke aufweisen, so dass das Gewinde zum Eindrehen der Schrauben direkt in die Wand des Walzengrundkörpers 3.2 eingebracht werden kann.

Bevorzugt sollten dabei selbstsichernd Schrauben verwendet werden um deren unbeabsichtigtes Lösen zu verhindern.

Es sollten bei einer Sammelwalze 3 alle Sammellippen 3.1 (bevorzugt 6 Stück) mit der gleichen Befestigungsart an dem Walzengrundkörper 3.2 befestigt werden.

Eine weitere nicht dargestellte Variante besteht darin, dass die Sammellippen 3.1 an den Walzengrundkörper anvulkanisiert oder angespritzt oder mittels eines anderen Verfahrens angebracht sind. Es besteht auch die Möglichkeit, dass der Walzengrundkörper und die Sammellippen einteilig beispielsweise durch Spritzgießen gefertigt werden.

Mit der vorliegenden Erfindung kann die Beseitigung von Schmutzstoffen beispielsweise mittels einfacher Zugmaschinen beziehungsweise Traktoren und ohne Frontlader erfolgen. Des Weiteren lässt sich der Behälter leichter reinigen, da durch die Schwerkraft die Verschmutzungen bei Zugabe von Wasser besser abfließen. Alternativ ist auch eine selbstfahrende bzw. autarke Variante der Vorrichtung möglich.

Erstmalig ist auch das Abmisten mittels einer autonom arbeitenden Vorrichtung möglich.

Die erfindungsgemäße Lösung kann auf unterschiedlichen Anlagen bzw. Böden zum Einsatz kommen. Der Einsatz dieser modernen Technik verändert die Arbeit im Pferdebetrieb grundlegend. Neben enormer Zeiteinsparung erleichtert sich auch die schwere Arbeit der Mitarbeiter, die bisher händig abäppeln. Der Die Vorrichtung ist witterungsunabhängig.

### Bezugszeichenliste

- 1: Behälter
- 1.1: Öffnung
- 1.2: Behälteröffnung
- 2: Räder
- 3: Förderwalze/Sammelwalze
- 3.1: Sammellippe
- 4: Schnellwechseleinrichtung
- 5: Aufnahmekonsole
- 6: Höhenverstellung
- 7: Traggestell
- 8: Scharnier
- 9: Hubelement
- 10: Konsole
- 11: Anschlusskonsole
- 12: Aussteifungsrahmen
- 13: Schottblech
- 14: Anschlussaufnahme
- 15: Zug-/ Drucktraverse
- 16: Druck-/Zugstrebe
- 17: Querriegel
- 18: Rundprofil
- 19: Flurwalze
- 20: Überdruck-/ und Rückschlagventil
- 21: Durchflussregelventil
- 22: Hydraulische Verrohrung
- 23: Aufnahmekasten
- 24: Umschaltventil
- 25: 12V Anschluss
- 26: Stromversorgung
- 27: Druckflussschutzregelventil
- 28: Aufnahmeleiste
- 28a: abgewinkelter Bereich
- 29: Druckleiste
- 29a: abgewinkelter Bereich
- 30: Durchbrüche
- 31: Winkelstück
- 31a: erste Seite
- 31b: abgewinkelter Bereich
- 32: Blechformteil
- 33: Abgekantetes Blech
- 33a: abgewinkelter Bereich

- A: Längsachse
- B: Boden
- R: Radius
- S: Schmutzstoffe
- U: Unterdruckzone

## Patentansprüche

1. Vorrichtung zur Aufnahme von Schmutzstoffen von einem Boden, insbesondere von landwirtschaftlichen Nutzflächen zum Abmisten von Höfen und Wiesen, umfassend ein Traggestell (7) einen Auffangbehälter (1) mit einer ersten Behälteröffnung (1.2) zur Zuführung der Schmutzstoffe, einer rotierend gelagerten Sammelwalze (3), welche im Bereich der ersten Behälteröffnung angeordnet ist und die Schmutzstoffe durch die erste Behälteröffnung in den Behälter fördert, wobei die Sammelwalze (3) in Richtung des Bodens reicht und einen Walzenkörper (3.2) mit umfangsseitige Sammellippen (3.1) aufweist, wobei die Sammellippen über die Länge des Walzenkörpers durchgängig ausgebildet sind und wobei jeweils die sich in der untersten Position befindliche Sammellippe (3.1) in ihrer vertikalen Ausrichtung bis zum Boden reicht oder maximal bis 35mm vom Boden beabstandet ist und dass jeweils mit einer nach unten weisenden und in Eingriff mit den Schmutzstoffen stehenden Sammellippe (3.1) durch eine Rotation der Sammelwalze (3) zuerst eine mechanischen Aufnahme von Schmutzstoffen und deren Förderung in den Auffangbehälter (1) erfolgt und danach auf dem Boden verbliebene Schmutzstoffe mittels des durch die Rotation der Sammellippe erzeugten Unterdrucks/Sogs in den Sammelbehälter gefördert werden.

2. Vorrichtung nach Anspruch 1, **dadurch gekennzeichnet, dass** die Länge der Sammelwalze 3 bis 25 cm kleiner ist, als die Innenbreite des Behälters im Bereich der ersten Öffnung.

3. Vorrichtung nach einem der vorgenannten Ansprüche, **dadurch gekennzeichnet, dass** die Drehzahl der Sammelwalze bei einer Erhöhung der Fahrgeschwindigkeit der Vorrichtung erhöht werden kann und dass bei einer Reduzierung der Fahrgeschwindigkeit der Vorrichtung die Drehzahl der Sammelwalze verringerbar ist.

4. Vorrichtung nach einem der vorgenannten Ansprüche, **dadurch gekennzeichnet, dass** die Sammellippe eine Länge L aufweist, die sich entlang der Längsachse (a) Sammelwalze erstreckt, sowie eine Höhe h und eine Dicke d, wobei die Sammellippe mit einem Bereich von ca. 10% bis 40% der Höhe h zwischen Aufnahmeleiste und Druckleiste eingespannt ist und wobei die Höhe einer Sammellippe 3cm bis 30cm, bevorzugt 12cm bis 17cm beträgt und wobei die Dicke d einer Sammellippe 3mm bis 20mm, bevorzugt 8mm bis 12mm beträgt.

5. Vorrichtung nach einem der vorgenannten Ansprüche, **dadurch gekennzeichnet, dass** die Sammellippen aus einem elastischen Material bestehen.

6. Vorrichtung nach einem der vorgenannten Ansprüche, **dadurch gekennzeichnet, dass** ein Unterboden des Sammelbehälters (1) zumindest im Bereich der ersten Behälteröffnung zwischen 20mm und 50mm über dem Boden angeordnet ist und dass der Unterboden des Sammelbehälters in Richtung seiner ersten Öffnung eine Schürfleiste aufweist, die in einem Winkel a nach unten geneigt ist.

7. Vorrichtung nach einem der vorgenannten Ansprüche, **dadurch gekennzeichnet, dass** die Sammellippen aus Silikon und/oder Gummi und/oder gewebeverstärktem Hochleistungskautschuk und/oder Polyurethan bestehen

8. Vorrichtung nach einem der vorgenannten Ansprüche, **dadurch gekennzeichnet, dass** die Vorrichtung in der Art eines Roboters autark betreibbar ist und nach Erreichen eines vorgegebenen Ladegewichts der aufgenommenen Schmutzstoffe selbsttätig zu einer Entleerungsstation fahrbar ist.

9. Vorrichtung nach einem der vorgenannten Ansprüche, **dadurch gekennzeichnet, dass** das Gewicht des Sammelbehälters mittels eines in die Vorrichtung integrierten Messsystems messbar ist.

10. Sammelwalze, insbesondere für eine Vorrichtung nach Anspruch 1, **dadurch gekennzeichnet, dass** die Sammelwalze (3) einen Walzenkörper (3.2) und Sammellippen (3.1) aufweist, wobei sich die Sammellippen (3.1) über die gesamte Breite oder nahezu die gesamte Breite des Walzenkörpers der Sammelwalze (3) durchgängig erstrecken und dass die Sammellippen aus einem elastischen Material bestehen.

11. Sammelwalze nach einem der vorgenannten Ansprüche, **dadurch gekennzeichnet, dass** mittels einer Aufnahmeleiste jede Sammellippe lösbar an dem Walzenkörper befestigt ist, wobei die Aufnahmeleiste bevorzugt mit dem Außendurchmesser des Walzenkörpers verschweißt vernietet oder verschraubt ist.

12. Sammelwalze nach einem der vorgenannten Ansprüche, **dadurch gekennzeichnet, dass** die Aufnahmeleiste und/oder eine Druckleiste, die sich an der anderen Seite der Sammellippe in Höhe der Aufnahmeleiste anschließt, streifenförmig ausgebildet sind und an ihrem von dem Walzenkörper wegweisenden Enden einen von der Sammellippe wegweisenden abgewinkelten Bereich aufweisen.

13. Sammelwalze nach einem der vorgenannten Ansprüche, **dadurch gekennzeichnet, dass** zwischen dem an der Sammellippe anliegenden Bereich und dem abgewinkelten Bereich ein Radius ausgebildet ist, über den sich die Sammellippe bei einer Auslenkung biegt.

14. Sammelwalze nach einem der vorgenannten Ansprüche, **dadurch gekennzeichnet, dass** die Sammellippe eine Länge L aufweist, die sich entlang der Längsachse Walze erstreckt, sowie eine Höhe h und eine Dicke d, wobei die Sammellippe mit einem Bereich von ca. 10% bis 40% der Höhe h zwischen Aufnahmeleiste und Druckleiste eingespannt ist und wobei die Höhe einer Sammellippe 3cm bis 30cm, bevorzugt 12cm bis 17cm beträgt und die Dicke d einer Sammellippe 3mm bis 20mm, bevorzugt 8mm bis 12mm beträgt.

15. Sammelwalze nach einem der vorgenannten Ansprüche, **dadurch gekennzeichnet, dass** die Sammellippen aus Silikon und/oder Gummi und/oder gewebeverstärktem Hochleistungskautschuk und/oder Polyurethan bestehen.

16. Sammelwalze nach einem der vorgenannten Ansprüche, **dadurch gekennzeichnet, dass** die Sammellippen mit ihrer zum Walzenkörper weisenden Längskante von dem Außendurchmesser des Walzenkörpers 1 bis 5 mm.

17. Verfahren zur Aufnahme von Schmutzstoffen von einem Boden/einer landwirtschaftlichen Nutzfläche, insbesondere zum Abmisten von Höfen und Wiesen, unter Nutzung eines Auffangbehälters (1) mit einer ersten Behälteröffnung (1.2) zur Zuführung der Schmutzstoffe und einer rotierend gelagerten Sammelwalze, welche Sammellippen aufweist, die über die Länge des Walzenkörpers durchgängig ausgebildet sind, wobei die Sammelwalze im Bereich der ersten Behälteröffnung angeordnet ist und die Schmutzstoffe durch die erste Behälteröffnung in den Behälter fördert, wobei jeweils die nach unten weisende und in Eingriff mit den Schmutzstoffen stehende Sammellippe durch eine Rotation der Sammelwalze zuerst eine mechanische Aufnahme von Schmutzstoffen realisiert und danach auf dem Boden verbliebene Schmutzstoffe mittels des durch die Rotation der Sammellippen erzeugten Unterdrucks/Sogs in den Sammelbehälter gefördert/gesaugt werden.
